# EUROPEAN PATENT APPLICATION

(11) **EP 4 503 069 A1**
(43) Date of publication of application: **05.02.2025**
(21) Application number: 23777698.4
(22) Date of filing: 20.02.2023
(51) Int. Cl.: H01F 27/08, H01F 27/12

(54) **COOLING DEVICE FOR SUSPENDED LOCOMOTIVE TRANSFORMER**

(30) Priority: 30.03.2022 CN 202210326306
(71) Applicant: Hunan Lince Rolling Stock Equipment Co., Ltd, Zhuzhou, Hunan 412001 (CN)
(72) Inventor: WANG, Xianhai, Zhuzhou, Hunan 412001 (CN); OU, Junhui, Zhuzhou, Hunan 412001 (CN); TAN, Zhixiong, Zhuzhou, Hunan 412001 (CN); HUANG, Wenchao, Zhuzhou, Hunan 412001 (CN); LI, Dandan, Zhuzhou, Hunan 412001 (CN); WU, Dongwei, Zhuzhou, Hunan 412001 (CN)
(74) Representative: Wunderlich & Heim Patentanwälte PartG mbB
(86) International application number: PCT/CN2023/077179
(87) International publication number: WO 2023/185319

(57) **Abstract**

The present invention provides a cooling device for a suspended locomotive transformer, comprising a heat radiator and a fan unit. The heat radiator comprises: a heat radiator core, a heat radiator air channel being formed in the heat radiator core; a transition air channel fixedly connected to the lower portion of the heat radiator core, the transition air channel being communicated with the heat radiator air channel, and a heat radiator oil channel being provided in the transition air channel; and an oil inlet pipe and an oil outlet pipe which are respectively connected to two ends of the transition air channel and communicated with the heat radiator oil channel, the oil inlet pipe and the oil outlet pipe being adapted to be connected to a transformer cabinet. The fan unit comprises a plurality of fans fixedly connected to the transition air channel. A high-temperature medium in the transformer enters the heat radiator oil channel from the transformer cabinet by means of the oil inlet pipe, cooling air enters the heat radiator air channel and cools the high-temperature medium in the heat radiator oil channel by means of heat exchange, heat is brought into the transition air channel under the action of the fan unit and then discharged by means of the fans, and the high-temperature medium returns to the transformer cabinet by means of the oil outlet pipe after being cooled.

## Description

### Cross Reference of Related Applications

The present application claims the priority of Chinese patent application No. 202210326306.0 entitled "COOLING DEVICE FOR SUSPENDED LOCOMOTIVE TRANSFORMER" and filed on March 30, 2022, the entire content of which is incorporated herein by reference.

### Technical Field

The present invention relates to the technical field of cooling device for locomotive, and specifically to a cooling device for transformer usedin suspended locomotive.

### Technical Background

With the advances in modern railroad electrification, shunting locomotives powered by internal combustion engine has evolved into internal combustion-electricity hybrid and internal combustion-electricity-storage battery hybrid shunting locomotives. However, shunting locomotives have more components and thus more restricted space due to the introduction of hybrid mode.

Existing cooling device for traction transformer used in the shunting locomotive is generally arranged at a bottom of the locomotive, and in juxtaposition with a transformer cabinet in a lateral direction of the locomotive. The heat generated during the operation of the transformer is transferred from the transformer cabinet to the cooling device through transformer oil, in order to complete heat exchange through forced air cooling. However, the heating power of the traction transformer increases along with the increase in demand for the locomotive traction power, which leads to larger size of the cooling device. Restricted by an overall layout and size of the shunting locomotive, the conventional cooling device can no longer be installed in the limited space at the bottom of the locomotive, but has to be connected to the transformer in a longitudinal direction. As a result, the cooling device takes up the space of the locomotive in the longitudinal direction.

At present, there are still problems in the cooling devices for shunting locomotives at home and abroad. For example, the cooling device for locomotive has small size and low cooling power, which cannot meet the demand for cooling of high-power traction suspended locomotive. In the cooling device for transformer used in an electric shunting locomotive, a radiator is arranged in juxtaposition with a fan. Therefore, the cooling device cannot be installed in a tilted space at the bottom of the locomotive. In addition, the noise of the cooling device seriously affects the occupants in the locomotive and the surrounding environment.

### Summary of the Invention

In view of the above technical problems in the prior arts, the present invention proposes a cooling device for transformer used in a suspended locomotive, which is not only able to ensure sufficient cooling power, but also able to make full use of the tilted space at the bottom of the locomotive, thus significantly improving the cooling performance and reducing the occupied space.

Aimed at solving the above technical problems, the present invention proposes a cooling device for transformer used in a suspended locomotive, which comprises a radiator, comprising a radiator core, in which a radiator air duct is formed, a transition air duct, fixedly connected to a lower portion of the radiator core and in communication with the radiator air duct, with a radiator oil duct arranged within the transition air duct, and an oil inlet pipe and an oil outlet pipe, which are connected to both ends of the transition air duct, respectively, and in communication with the radiator oil duct, for connecting to a transformer cabinet; and a fan unit, comprising a plurality of fans fixedly connected to the transition air duct, wherein a high-temperature medium in the transformer enters the radiator oil duct from the transformer cabinet through the oil inlet pipe, while cooling air enters the radiator air duct to cool the high-temperature medium in the radiator oil duct through heat exchange, and the fan unit is configured to transfer heat into the transition air duct, which is then discharged through the fans, the high-temperature medium returning to the transformer cabinet through the oil outlet pipe after being cooled.

In one embodiment, an upper end of the radiator core is formed as a radiator air inlet, which is in communication with the radiator air duct.

In one embodiment, the transition air duct is divided into a plurality of air duct sections corresponding to the fans, wherein outlets of the air duct sections are formed as radiator air outlets in communication with air inlets of the fans.

In one embodiment, a buffer air duct, which is formed between the radiator air outlets and the air inlets of the fans, has a cross section in a shape of a regular polygon.

In one embodiment, the radiator is a plate-fin radiator or a tube-fin radiator.

In one embodiment, each fan comprises a volute; an impeller arranged inside the volute, an air inlet duct directly opposite the impeller being formed at an inlet end of the volute; and a motor, which is configured to drive the impeller and fixed on a bottom plate of the volute, wherein an output shaft of the motor passes through the bottom plate to be fixedly connected to the impeller.

In one embodiment, a reinforcing plate is provided between the motor and the bottom plate.

In one embodiment, a junction box is installed on an outer surface at a side end of the volute.

In one embodiment, the fans are fixedly connected to the transition air duct through fan installation strips.

In one embodiment, the cooling device further comprises an anti-detachment unit, which comprises at least two anti-detachment columns distributed at intervals from each other on each fan installation strip, with through holes provided on the anti-detachment columns; anti-loosening elements for passing through the through holes; and clamping elements, wherein the fans are fixedly connected to the fan installation strips through an installation plate at the inlet end of the volute, and the anti-detachment columns are configured to pass through the installation plate, so that the through holes are exposed; and the anti-loosening elements are configured to pass through the through holes on all the anti-detachment columns in sequence, with both ends of the anti-loosening elements clamped by the clamping elements.

In one embodiment, a gasket assembly is further provided between the installation plate and the anti-loosening elements, wherein the anti-detachment columns pass through the gasket assembly.

In one embodiment, the cooling device further includes a protection unit, which includes an inlet protection net installed on an upper portion of the radiator and an outlet protection net installed on a lower portion of the radiator.

In one embodiment, a switch control valve is provided at each of the oil inlet pipe and the oil outlet pipe.

In one embodiment, the fans further comprise a monitoring and protection system, which includes an air pressure switch and a temperature monitoring element.

Compared with the prior arts, the present application has the following advantages.

According to the present invention, the transition air duct of the cooling device for transformer used in a suspended locomotive is divided into a plurality of air duct sections, each of which is separately connected to a corresponding fan of a plurality of fans. Thus, the shutdown of one of the plurality of fans due to fault will not affect the cooling power of other fans. The fans are mounted at the outlets of the transition air duct at a tilt, so that the tilted space on the transformer side at the bottom of the locomotive can be fully utilized. In this manner, the cooling air will not blow to the ground due to small space between the fans and the rail, thereby avoiding resistance. Moreover, the anti-detachment unit of the cooling device is able to prevent the fans from accidentally falling off, and the protection unit thereof is able to effectively protect the motor and the cables, thus significantly improving the safety performance of the cooling device. Therefore, the cooling device according to the present invention not only ensures sufficient heat dissipation power, but also makes full use of the tilted space at the bottom of the locomotive, which significantly enhances the cooling performance thereof while reducing the occupied space.

### Brief Description of the Drawings

In the following, the present invention will be described with reference to the accompanying drawings.
Fig. 1 schematically shows a structure of a cooling device for transformer used in a suspended locomotive according to the present invention.
Fig. 2 schematically shows a structure of a radiator in the cooling device as shown in Fig. 1.
Fig. 3 is a sectional view of a fan unit in the cooling device as shown in Fig. 1.
Fig. 4 schematically shows a structure of an anti-detachment unit in the cooling device as shown in Fig. 1.
Fig. 5 is an enlargement view of area A in Fig. 4.
Fig. 6 schematically shows a structure of an inlet protection net of a protection unit in the cooling device as shown in Fig. 1.
Figs. 7 and 8 schematically show a structure of an outlet protection net of the protection unit in the cooling device as shown in Fig. 1.
Fig. 9 shows operating principles of the cooling device for transformer used in the suspended locomotive according to the present invention.

In the present application, all accompanying drawings are schematic ones, provided to illustrate the principle of the present invention merely, and are not necessarily drawn to actual scale.

### Detailed Description of Embodiments

The present invention will be described below with reference to the accompanying drawings. It should be noted that the following is provided to illustrate the principle of the present invention merely, and is not intended to restrict the present invention.

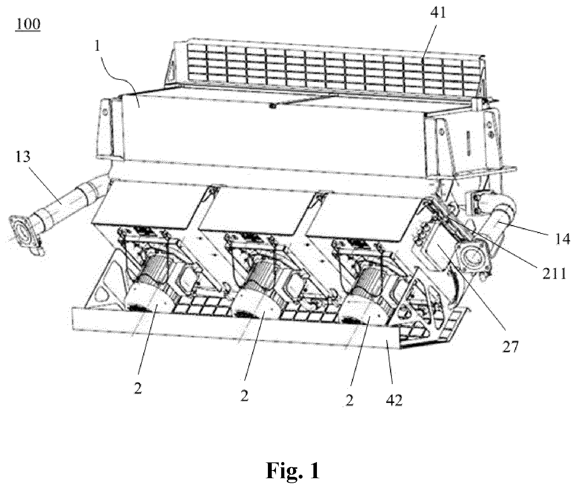

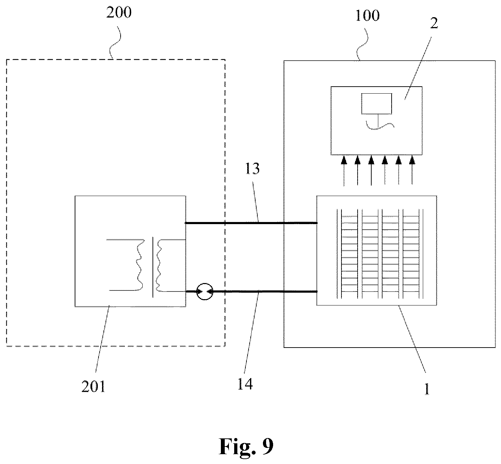

Fig. 1 schematically shows a structure of a cooling device 100 for transformer used in a suspended locomotive according to the present invention. As shown in Fig. 1, the cooling device 100 comprises a radiator 1 and a fan unit. The radiator 1 comprises a radiator core 11, a transition air duct 12, an oil inlet pipe 13 and an oil outlet pipe 14. A radiator air duct (not shown) is formed within the radiator core 11. The transition air duct 12 is fixedly connected to a lower portion of the radiator core 11 and in communication with the radiator air duct. A radiator oil duct (not shown) is arranged within the transition air duct 12. The oil inlet pipe 13 and the oil outlet pipe 14 are connected to both ends of the transition air duct 12, and in communication with both ends of the radiator oil duct, respectively, for connecting to a transformer cabinet 201 of a transformer 200 (see Fig. 9). The fan unit comprises a plurality of fans 2 fixedly connected to the transition air duct 12.

During operation, high-temperature medium (e.g., ester oil) in the transformer enters the radiator oil duct from the transformer cabinet 201 through the oil inlet pipe 13, while cooling air enters the radiator air duct to cool the high-temperature medium in the radiator oil duct through heat exchange. The fan unit is configured to transfer heat into the transition air duct 12, which is then discharged through the fan 2. The high-temperature medium returns to the transformer cabinet 201 through the oil outlet pipe 14 after being cooled. In this manner, the cooling of the transformer is realized.

In actual application, a main body of the cooling device 100 is mounted at a bottom portion of the locomotive, and arranged in juxtaposition with the transformer in a lateral direction of the locomotive, thus avoiding taking up longitudinal space of the locomotive.

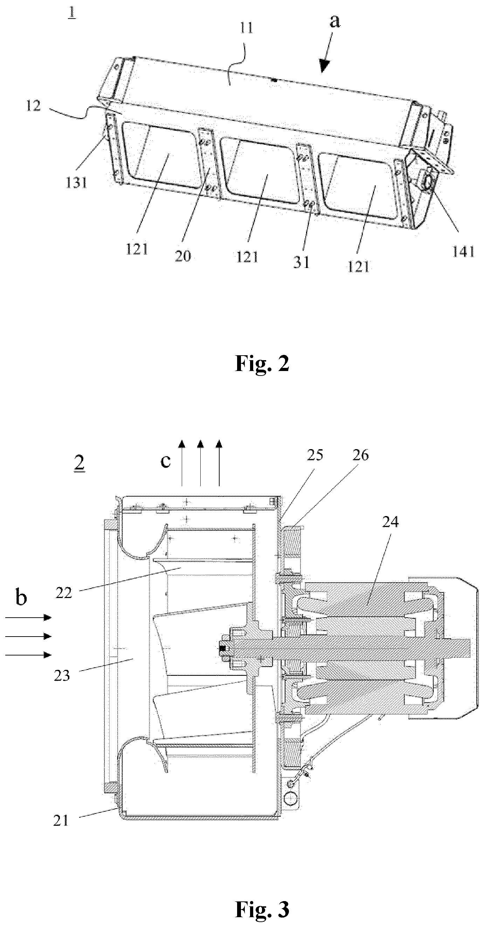

Fig. 2 schematically shows a structure of the radiator 1. As shown in Fig. 2, an upper end of the radiator core 11 is formed as a radiator air inlet, which is in communication with the radiator air duct within the radiator core 11. Arrow *a* in Fig. 2 indicates a direction along which the cooling air enters the radiator air inlet. Therefore, air flows through the radiator 1 from up to bottom. That is, the cooling air enters the radiator 1 from the radiator air inlet formed on an upper portion of the radiator 1 along the direction indicated by arrow *a*, and then exits from the fans 2 arranged under the radiator 1.

The transition air duct 12 is fixedly connected to the lower portion of the radiator core 11. In one embodiment, a cross-section of the transition air duct 12 has a right triangle shape, wherein a first sidewall surface on which one of right-angle sides is located is fixedly connected to a lower end surface of the radiator core 11. A through hole is provided on the first sidewall surface, whereby an inner cavity of the transition air duct 12 is in communication with the radiator air duct within the radiator core 11. A second sidewall surface on which the other right-angle side is located may be arranged to be flush with an installation surface to facilitate installation. A third sidewall surface on which a hypotenuse of the right triangle is located tilts downwards. Sealing plates are arranged at both ends of the transition air duct 12. Oil pipe joints 131 and 141 are provided on the sealing plates, respectively, for connecting to the oil inlet pipe 13 and oil outlet pipe 14, respectively.

In a preferred embodiment, a switch control valve (not shown) may be provided at each of the oil inlet pipe 13 and the oil outlet pipe 14. The switch control valve may be, for example, a butterfly valve.

According to the present invention, a plurality of partition plates spaced apart from each other are provided in an interior of the transition air duct 12, thereby dividing the transition air duct 12 into a plurality of air duct sections 121, each of which corresponds to a fan 2. Outlets of the air duct sections 121 evenly spaced apart from each other are arranged on the third sidewall surface where the hypotenuse is located, and formed as radiator air outlets. In the embodiment shown in Fig. 2, the transition air duct 12 is separated into three air duct sections 121. The radiator air outlets are in communication with air inlets of the fans 2. For one thing, each air duct section 121 is separately connected to a corresponding fan 2, so that each fan 2 corresponds to an air duct section 121. In this manner, the shutdown of a fan due to fault will not affect the cooling power of other fans. For another, each fan 2 is mounted at the outlet of a corresponding air duct section 121 at a tilt, so that the tilted space on the transformer side at the bottom of the locomotive can be fully utilized. In this way, the cooling air will not blow to the ground due to small space between the fans 2 and the rail, thereby avoiding resistance.

That is, the radiator 1 is divided into two parts, wherein the radiator core 11 is formed as an upper part of the radiator 1, which is mainly for heat exchange, and the transition air duct 12 is formed as a lower part of the radiator 1, which is mainly configured to guide hot air into different fans 2. The transition air duct 12 can smoothly supply the air inside the radiator core 11 to the corresponding centrifugal fans 2, which can not only reduce air resistance to a minimum, but also ensure that the plurality of fans 2 will not be affected by each other in case of fault, so that the cooling airflow of other fans will not be affected (without air running). In addition, the transition air duct 12 can also carry the weight of the suspended fan 2.

In one embodiment, the radiator 1 and the transition air duct 12 are formed as a whole through welding, which effectively enhances the integrity of the cooling device 100 and reduces sealing connection surfaces, thereby significantly enhancing the structural strength of the transition air duct 12 and avoiding leakage of the cooling device 100.

According to one embodiment of the present invention, a buffer air duct, which is formed between the radiator air outlet and the air inlet of the fan 2, has a cross section in a shape of a regular polygon, preferably a square. Compared with a circular-shaped cross section, the square-shaped cross section can increase the ventilation area and significantly reduce local resistance of the air duct, which is very conducive to noise reduction. In the meantime, the radiator air inlet on the upper portion of the radiator 1 faces upwards after the cooling device 100 is installed at the bottom of the locomotive. Compared to existing radiators where the air flows along a horizontal direction, the air enters the radiator 1 according to the present invention from the upper portion thereof and exits from the lower portion thereof along a vertical direction. Therefore, the cross section of the radiator air duct according to the present invention is optimized, and the overall air duct resistance and the fan power are reduced. In this way, active noise reduction can be achieved, and the performance of the cooling device 100 in noise reduction can be significantly improved.

In one embodiment, the radiator 1 is a plate-fin radiator made through vacuum brazing. Further preferably, the radiator 1 is a staggered-teeth plate-fin radiator, which has a higher heat dissipation coefficient than those of flat and corrugated plate-fin radiators, thus reducing the volume of the radiator core 11 and the noise generated by the cooling device 100.

Alternatively, the radiator 1 may also be a tube-fin radiator made through bulging process.

According to the present invention, as shown in Fig. 3, the fan 2 comprises a volute 21, an impeller 22 and a motor 24. The impeller 22 is arranged inside the volute 21. An air inlet duct 23 formed at an inlet end of the volute 21 is directly opposite the impeller 22. The motor 24, which is configured to drive the impeller 22, is fixed on a bottom plate 25 of the volute 21, wherein an output shaft of the motor 24 passes through the bottom plate 25 to be fixedly connected to the impeller 22. In Fig. 3, arrow b and arrow c indicate directions along which the air flows in the fan, wherein arrow b indicates the inlet direction, arrow c indicates the outlet direction, and the air outlet indicated by arrow c faces downwardly during installation.

In one embodiment, a reinforcing plate 26 is provided between the motor 22 and the bottom plate 25, for enhancing the installation stability of the motor 22.

A junction box 27 is fixedly installed on an outer surface at a side end of the volute 21 through bolts. A power cord of the locomotive is connected to the junction box 27 from above the cooling device 100, and then to the motor 22.

According to the present invention, fan installation strips 20 (see Fig. 2) for installing the fans 2 are arranged on an end surface of the transition air duct 12 corresponding to the outlets of the air duct sections 121. The plurality of fan installation strips 20 are arranged on both sides of the outlet of each air duct section 121. In this manner, the fans 2 are fixedly connected to the transition air duct 12 through the fan installation strips 20.

According to one embodiment of the present invention, the fan 2 may be a centrifugal fan. Since the cooling device 100 is installed at the bottom of the locomotive with a short distance from the rail, the fan 2 may be preferably a box-type centrifugal fan, so that the cooling air can blow out of the cooling device at a tilt. Thus, the cooling air can be effectively prevented from blowing directly to the ground after passing through the radiator 1, so as to avoid resistance.

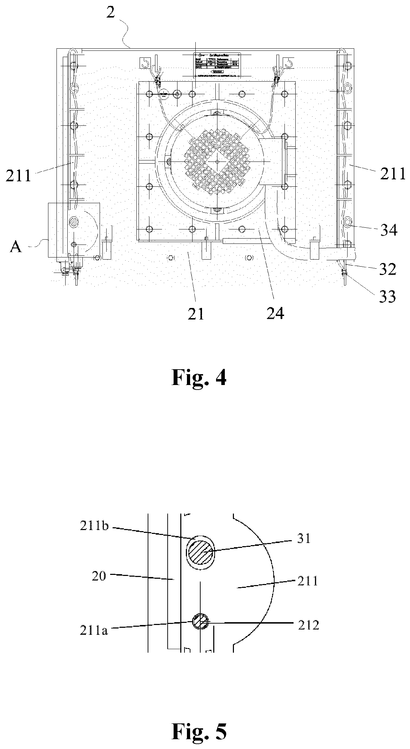

According to the present invention, the cooling device 100 further comprises an anti-detachment unit, which is configured to prevent the fans 2 from accidentally falling off. As shown in Figs. 4 and 5, the anti-detachment unit includes a plurality of anti-detachment columns 31, anti-loosening elements 32 and clamping elements 33. At least two anti-detachment columns 31 are distributed at intervals from each other on each fan installation strip 20, for fixedly installing the fans. Through holes are provided on each of the anti-detachment columns 31. Preferably, the anti-detachment columns 31 can be fixed on the fan installation strip 20 through welding. Each fan 2 can be fixedly installed through four anti-detachment columns 31. The anti-loosening elements 32 may be, for example, wire ropes, and the clamping elements 33 may be, for example, wire clips. An installation plate 211 (see Fig. 1) is fixedly installed at an inlet end of the volute 21 (left side in Fig. 3), for fixedly installing the fans 2. In one embodiment, the installation plate 211 is provided with a plurality of evenly distributed threaded holes 211a, in each of which a bolt fastener 212 is fittingly installed. Thus, the fans 2 and the installation plate 211 are fixedly installed as a whole. The installation plate 211 is further provided with installation holes 211b, which are preferably waist-shaped holes. The fans 2 are fixedly connected to the fan installation strips 20 through the installation plate 211 at the inlet end of the volute. The anti-detachment columns 31 pass through the corresponding installation holes 211b on the installation plate 211, so that the through holes on the anti-detachment columns 31 are exposed. The anti-loosening elements 32 pass through the corresponding through holes on all the anti-detachment columns 31 in sequence, and both ends of the anti-loosening element 32 are clamped by the clamping elements 33. Preferably, both ends of the anti-loosening element 32 are on a side close to the air outlet and clamped by the clamping elements 33. Such structures can avoid inconvenience in operation due to limited space, and facilitate operation and maintenance. The anti-detachment unit can prevent the fans 2 from falling off from the locomotive when the bolt fasteners are loosen accidentally. Moreover, the anti-detachment unit is convenient to install and maintain, and takes up less space.

To prevent the anti-loosening elements 32 from disengaging from the waist-shaped holes of the installation plate 211 when the fans 2 become loose, a gasket assembly is further provided between the installation plate 211 and the anti-loosening elements 32, wherein the anti-detachment columns 31 pass through the gasket assembly. In one embodiment, the gasket assembly consists of a buffer rubber pad 341 and an anti-detachment gasket 342.

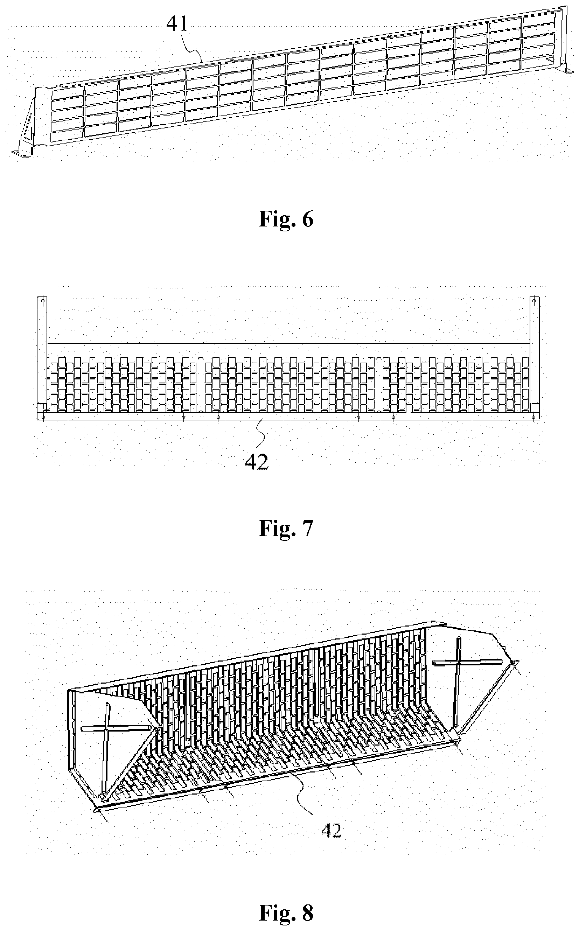

The cooling device 100 further includes a protection unit. The protection unit includes an inlet protection net 41 and an outlet protection net 42 arranged at an inlet and an outlet of the cooling device 100, respectively. The inlet protection net 41 is installed on the upper portion of the radiator 1, with an upper end thereof connected to the locomotive, while the outlet protection net 42 is installed on the lower portion of the radiator 1. When the locomotive is running, the outlet protection net 42 can effectively protect the motors 24 of the fans 2 and related cables from being accidentally damaged by debris, such as sand and gravel. Fig. 6 schematically shows a structure of the inlet protection net 41. Figs. 7 and 8 schematically show a structure of the outlet protection net 42.

Alternatively, or in addition, the fans 2 further comprise a monitoring and protection system (not shown), which includes an air pressure switch and a temperature monitoring element. The monitoring and protection system is configured to monitor parameters, such as pressure, temperature or the like, of the fans 2 in real time, and automatically control the operation of the fans 2.

Fig. 9 shows operating principles of the cooling device 100 for transformer used in the suspended locomotive according to the present invention. The working procedures of the cooling device 100 are described briefly as follows. In actual operation, the high-temperature medium (e.g., ester oil) in the transformer 200 enters the radiator oil duct of the radiator 1 from the transformer cabinet 201 through the oil inlet pipe 13. In the meantime, the cooling air enters the radiator air duct of the radiator 1 from side wall filters on both sides of the locomotive to cool the high-temperature medium in the radiator oil duct through heat exchange. The heat is transferred to the transition air duct 12 by the fan unit, and then is discharged through the fans 2. Thus, the radiator 1 discharges heat from the bottom of the locomotive to the outside through the fan unit by means of forced air cooling. After being cooled, the high-temperature medium turns into a low-temperature medium, which returns to the transformer cabinet 201 through the oil outlet pipe 14. In this manner, the cooling of the transformer 200 is completed, ensuring that the working temperature of the transformer 200 does not exceed a set value.

The cooling device 100 for transformer used in the suspended locomotive according to the present invention not only ensures sufficient heat dissipation power, but also makes full use of the tilted space at the bottom of the locomotive, which significantly enhances the cooling performance of the cooling device 100 while reducing the occupied space. The transition air duct 12 is divided into a plurality of air duct sections 121, each of which is separately connected to a corresponding fan 2 of a plurality of fans. Thus, the shutdown of one of the plurality of fans due to fault will not affect the cooling power of other fans. Each fan 2 is mounted at the outlet of a corresponding air duct section 121 at a tilt, so that the tilted space on the transformer side at the bottom of the locomotive can be fully utilized. In this manner, the cooling air will not blow to the ground due to small space between the fans 2 and the rail, thereby avoiding resistance. Moreover, the anti-detachment unit of the cooling device 100 is able to prevent the fans 2 from accidentally falling off, and the protection unit thereof is able to effectively protect the motor 24 and the cables, thus significantly improving the safety performance of the cooling device 100.

It should be understood that in the present invention, the phrases "an embodiment", "some embodiments", "example", "specific example" or "some examples" as mentioned in the description mean that the particular features, structures, materials or characteristics described in conjunction with the embodiment or example are included in at least one embodiment or example of the present invention. Thus, the above illustrative phrases described throughout the description do not necessarily refer to the same embodiment or example. Moreover, the particular features, structures, materials, or characteristics described herein may be combined in any one or more of the embodiments or examples in a suitable manner.

Finally, it should be noted that the foregoing description is merely illustrative of preferred embodiments of the present invention, and is not intended to restrict the present invention. Although the present invention is described in detail with reference to the above embodiments, it is still possible for one skilled in the art to modify the technical solutions defined in the above embodiments or to replace some of the technical features with equivalent ones. Any modifications, equivalent substitutions, improvements, and the like falling within the spirit and principles of the present invention are intended to be included within the scope of protection of the present invention.

## Claims

1. A cooling device for transformer used in a suspended locomotive, comprising:
a radiator (1), which comprises:
a radiator core (11), in which a radiator air duct is formed;
a transition air duct (12), fixedly connected to a lower portion of the radiator core and in communication with the radiator air duct, with a radiator oil duct arranged within the transition air duct; and
an oil inlet pipe (13) and an oil outlet pipe (14), which are connected to both ends of the transition air duct, respectively, and in communication with the radiator oil duct, for connecting to a transformer cabinet (201); and
a fan unit, comprising a plurality of fans (2) fixedly connected to the transition air duct,
wherein a high-temperature medium in the transformer enters the radiator oil duct from the transformer cabinet through the oil inlet pipe, while cooling air enters the radiator air duct to cool the high-temperature medium in the radiator oil duct through heat exchange, and the fan unit is configured to transfer heat into the transition air duct, which is then discharged through the fans, the high-temperature medium returning to the transformer cabinet through the oil outlet pipe after being cooled.

2. The cooling device according to claim 1, **characterized in that** an upper end of the radiator core is formed as a radiator air inlet, which is in communication with the radiator air duct.

3. The cooling device according to claim 1 or claim 2, **characterized in that** the transition air duct is divided into a plurality of air duct sections (121) corresponding to the fans, wherein outlets of the air duct sections are formed as radiator air outlets in communication with air inlets of the fans.

4. The cooling device according to claim 3, **characterized in that** a buffer air duct, which is formed between the radiator air outlets and the air inlets of the fans, has a cross section in a shape of a regular polygon.

5. The cooling device according to claim 1 or claim 2, **characterized in that** the radiator is a plate-fin radiator or a tube-fin radiator.

6. The cooling device according to claim 1, **characterized in that** each fan comprises:
a volute (21);
an impeller (22) arranged inside the volute, an air inlet duct (23) directly opposite the impeller being formed at an inlet end of the volute; and
a motor (24), which is configured to drive the impeller and fixed on a bottom plate (25) of the volute, wherein an output shaft of the motor passes through the bottom plate to be fixedly connected to the impeller.

7. The cooling device according to claim 6, **characterized in that** a reinforcing plate (26) is provided between the motor and the bottom plate.

8. The cooling device according to claim 6 or claim 7, **characterized in that** a junction box (27) is installed on an outer surface at a side end of the volute.

9. The cooling device according to claim 6, **characterized in that** the fans are fixedly connected to the transition air duct through fan installation strips (20).

10. The cooling device according to claim 9, **characterized in that** the cooling device further comprises an anti-detachment unit, which comprises:
at least two anti-detachment columns (31) distributed at intervals from each other on each fan installation strip, with through holes provided on the anti-detachment columns;
anti-loosening elements (32) for passing through the through holes; and
clamping elements (33),
wherein the fans are fixedly connected to the fan installation strips through an installation plate (211) at the inlet end of the volute, and the anti-detachment columns are configured to pass through the installation plate, so that the through holes are exposed, and
the anti-loosening elements are configured to pass through the through holes on all the anti-detachment columns in sequence, with both ends of the anti-loosening elements clamped by the clamping elements.

11. The cooling device according to claim 10, **characterized in that** a gasket assembly (34) is further provided between the installation plate and the anti-loosening elements, wherein the anti-detachment columns pass through the gasket assembly.

12. The cooling device according to claim 1, **characterized in that** the cooling device further includes a protection unit, which includes an inlet protection net (41) installed on an upper portion of the radiator and an outlet protection net (42) installed on a lower portion of the radiator.

13. The cooling device according to claim 1, **characterized in that** a switch control valve is provided at each of the oil inlet pipe and the oil outlet pipe.

14. The cooling device according to claim 1, **characterized in that** the fans further comprise a monitoring and protection system, which includes an air pressure switch and a temperature monitoring element.
